# EUROPEAN PATENT APPLICATION

(11) **EP 3 113 481 A1**
(43) Date of publication of application: **04.01.2017**
(21) Application number: 15306021.5
(22) Date of filing: 29.06.2015
(51) Int. Cl.: H04N 5/232

(54) **APPARATUS AND METHOD FOR CONTROLLING GEO-TAGGING IN A CAMERA**

(71) Applicant: Thomson Licensing, 92130 Issy-les-Moulineaux (FR)
(72) Inventor: Keller, Anton Werner, 8905 Arni (CH); Lindemann, Robert, 30559 Hannover (DE)
(74) Representative: Huchet, Anne

(57) **Abstract**

A camera has at least one geo-location receiver that is inactive when the camera is switched off and is active when the camera is switched on. While the camera is switched off or the at least one geo-location receiver has not acquired a correct geo-location, sensor data from at least one sensor provided with the camera that is adapted to detect motion is acquired, and a preliminary geo-location is determined using an estimated spatial displacement of the camera from the last known geo-location based on the acquired sensor data. When the camera is switched on a process operating the at least one geo-location receiver for receiving a correct geo-location is run. While a correct geo-location from the at least one geo-location receiver is not received and the distance between the preliminary geo-location and the last known geo-location exceeds a threshold value, the preliminary geo-location that is added to an image or a video is tagged as unreliable, or adding the preliminary geo-location data to an image or video is prevented.

## Description

### FIELD

The present invention relates to cameras capable of recording geo-location data along with images and/or video.

### BACKGROUND

Digital still and video cameras may be equipped with geo-location receivers for acquiring a geo-location for the current position of the camera. Geo-location receivers include, e.g., receivers adapted to receive signals provided by satellites of the Global Positioning System (GPS) operated by the U.S., the Russian equivalent known under GLONASS, or the European equivalent known under the name Galileo. Geo-location signals received from satellite may be complemented by corresponding signals provided by ground-based emitters. Once determined the geo-location may be added to an image or a video for later reference.

GPS, GLONASS and Galileo receivers consume a significant amount of energy when operated, which is generally undesired in battery-operated devices like cameras. In addition, the typical use profile of most cameras is quite special, including long periods of non-use, followed by comparatively short periods of intensive use. Thus, continuously operating the geo-location sensors is likely to deplete the battery during the periods of non-use, leaving no power for using the camera when a user wants to use the camera. In order to maximize the battery life and to reduce the power consumption the geo-location sensors are not operated continuously, but only when the camera is switched on. This, however, means that the geo-location is only available once the geo-location sensor has received a correct geo-location. When the camera is moved between two instances of use the previous geo-location is not valid anymore and the geo-location receiver must be operated again for acquiring a correct geo-location.

GPS, GLONASS and Galileo receivers may need significant time for acquiring signals from at least four satellites, which is necessary for determining the accurate location. In case a user carries a camera, switches it on for quickly taking a photo, and immediately switches it off again to conserve battery power the time for acquiring the geo-location may not suffice, and incorrect geo-location data may be added to a picture.

### SUMMARY

The present method and apparatus address the above-mentioned shortcomings.

In the following the expression 'geo-location receiver' may refer to the geo-location receiver hardware, the geo-location receiver software for operating the hardware and for extracting the geo-location data, or both, as will be apparent from the respective context.

A camera implementing the present method has at least one geo-location receiver adapted to receive signals from satellites or ground-based emitters of one or more of the geo-location systems mentioned before. The geo-location receiver is inactive when the camera is switched off, and is active when the camera is switched on. Inactive in this context means that the receiver is not powered and does not receive geo-location signals. Active in this context means that the receiver is switched on and is operated together with corresponding software to acquire signals in order to determine a current geo-location. The acquisition of a current geo-location may be subject to limited availability of signals provided by one or more of the geo-location systems, e.g. due to bad reception conditions, the receiver being in an area not properly covered by a sufficiently large number of signal sources, inside a building complex, and the like. The acquisition of a current geo-location may also require a time after activation of the at least one geo-location receiver that is longer than a time between switching the camera on for capturing an image or a video and switching the camera off after capturing the image or the video. This may occur for example when a user switches the camera on for taking a single snapshot image and immediately after that switches the camera off and moves to a different location, which is a very common usage scenario. The short operating time may be insufficient for the geo-location receiver to receive a correct geo-location. The camera implementing the present method is also equipped with at least one sensor adapted to detect motion of the camera. The sensors include sensors adapted to determine acceleration, rotation, magnetic fields, and the like. These sensors consume significantly less power than a geo-location receiver during operation and can thus be operated continuously or at suitable intervals even when the camera is otherwise switched off, i.e., is not ready for capturing images or videos. The camera further comprises a microprocessor, random access memory and non-volatile memory operatively coupled to the microprocessor. The non-volatile memory stores program instructions which, when executed by the microprocessor, perform the present method.

In accordance with the present method, while the camera is switched off or the at least one geo-location receiver has not yet acquired a correct geo-location, sensor data from the at least one sensor adapted to detect motion that is provided with the camera is acquired. A correct geo-location in this context relates to a geo-location that is determined from geo-location signals received from three or more separate individual signal sources of at least one geo-location system. Signals from different geo-location systems may be combined for determining a correct geo-location. Further in accordance with the present method, a spatial displacement of the camera from the last known correct geo-location is estimated based on the acquired sensor data. The estimation may include but is not limited to an implementation of dead-reckoning, in which a speed and a direction of motion is determined from acceleration data, and where speed, direction and time information are used to estimate a current location based on a previously known location. Sensor data from sensors adapted to detect rotation, e.g. gyroscopes, and from sensors adapted to detect magnetic fields, e.g. from an electronic compass, may be used to improve the accuracy of the estimation. Also, barometric data may be used for improving the accuracy, indicating climbing or descending, which can be used for eliminating vertical motion components not needed for the projection of the geo-location in a horizontal plane (or on an idealized spherical surface, for that matter). Barometric data may also be used for detecting a change in height and thus a displacement signalling an inaccuracy of the last geo-location. The acquired sensor data representative of motion of the camera may be subject to filtering to remove high-frequency components resulting from arbitrary vibration or other irrelevant motion components that could disturb the calculation of the preliminary geo-location.

When the camera is switched on the microprocessor of the camera runs or executes a process that operates the at least one geo-location receiver for receiving a correct geo-location. As mentioned before, receiving a correct geo-location may require some time and also may require that a minimum number of geo-location signals from separate sources is available, for example, at least three or four signals from separate sources.

In accordance with the present method the estimated spatial displacement and the last known correct geo-location are used for determining a preliminary geo-location. The preliminary geo-location can be used in various ways, e.g., for tagging geo-location data that is added to an image or a video as unreliable, or for preventing geo-location data from being added to an image or a video. Tagging geo-location data as unreliable, or preventing geo-location data from being added to an image or a video may be conditional, e.g., may happen only when the estimated spatial displacement and thus the estimated preliminary geo-location is outside a radius around the last known correct geo-location. This takes into account that often an absolute correct geo-location is not necessary, i.e., a geo-location that is correct within a radius of some hundred meters will still be accepted by a user, whereas a spatial displacement of several kilometres or even several hundred kilometres may not be estimated with sufficient accuracy. Estimating larger displacements, i.e., spatial displacements in the range of several kilometres or several hundred kilometres using accelerometer data and time information are likely to be too inaccurate to be accepted by a user. The accuracy depends on the accuracy of the accelerometer data, gyroscope data, etc., and the accuracy of the time base. The radius outside which the geo-location data will be tagged unreliable or will not be written at all may be user settable.

In one example a reliability value is added to the estimated spatial displacement and/or to the preliminary geo-location, e.g. Lat.: 41.9000N, Long.: 12.5000E, accuracy 1 km. The reliability value may be decreasing with increasing temporal distance to the time the last known correct geo-location was determined, taking the relatively low accuracy of consumer-grade real-time clocks into account, which has an immediate effect on the estimation. The reliability value may be assigned from a range of values, which may linearly or non-linearly depend from the time that has elapsed since the last known correct geo-location was available. This may be dependent from the type of real-time clock that is provided in the camera, and may be user or factory settable. If, for example, a radio-controlled real-time clock is provided with the camera and receives valid time data, the decay of the reliability may be slower than in other cases. The reliability value may also be decreasing with increasing distance between the last known correct geo-location and the preliminary geo-location.

In accordance with the present method the estimated spatial displacement or the estimated preliminary geo-location may be provided to the process that operates the at least one geo-location receiver for obtaining the geo-location of the camera. This may accelerate the acquisition of a correct geo-location through the geo-location receiver.

Because a camera can be oriented in different directions while carried by a person, in one example of the present method the accelerometer readings and the data from the gyroscope sensor and/or the magnetic field sensor and/or an electronic compass provided in the camera are correlated and are normalized into three orientation-independent time series: Cartesian magnitude of the acceleration vector, magnitude of projection onto the true horizontal plane, and projection onto the true vertical axis. To derive the latter two time series, one embodiment of the present method computes the dynamic component of device acceleration in the true global vertical plane and the true horizontal plane perpendicular to the vertical plane. The resulting three time series (Cartesian magnitude of the acceleration vectors, magnitude of projection onto the true horizontal plane, and projection onto the true vertical axis) are then filtered and features are computed using both the time and frequency domains. To obtain frequency domain information, a fast Fourier transform (FFT) is run and standard steps are performed to compute a correctly-scaled magnitude frequency response. Features that may be used include time-domain mean, time-domain standard deviation, time-domain real-valued discrete power, time-domain entropy, frequency-domain energy, the frequency with the highest amplitude, and the corresponding amplitude, and filtered derivatives thereof. The features are then combined into a feature vector and used for estimating the spatial displacement of the camera in generally known process that will not be described herein in greater detail.

In an embodiment the camera, upon receiving a user input to switch the camera off, issues an alert perceivable to the user when a geo-location could not be received prior to switching the camera off. The user may be given a brief time period to switch the camera back on before the geo-location receiver is actually being powered off, or to confirm switching the camera off without finishing the acquisition of the correct geo-location. It is also possible to receive a dedicated user input instructing the camera to keep the geo-location receiver active until a correct geo-location has been acquired and added to the last image or video that was taken. This dedicated user input may also be provided from a user configuration file or database, and the alarm issued may simply remind the user of the activity that will be completed before switching off the camera.

In an embodiment the camera wirelessly connects to an external device when switched on, for receiving a valid or correct geo-location from the external device. The external device includes a geo-location enabled smartphone or a dedicated geo-location receiver with wireless connection capability. Wireless connection capability may be provided, for example, by a Bluetooth™ or wireless local area network (WLAN) connection.

In an embodiment of the present method the estimated spatial displacement is used for interpolating geo-locations for images or videos taken at a time between two known correct geo-locations. For example, when an image is taken and a correct geo-location could not be established, the estimated geo-location, i.e. the geo-location estimated based upon the spatial displacement, may be added to the image. When a further image is taken at a later time and a correct geo-location has been determined for that further image the correct geo-location thereof may be used for improving or correcting the estimated geo-location of the previously taken image.

In an embodiment of the present method past geo-locations, preliminary and/or correct, are stored in the camera for improving the estimation results for future estimations. The improvement may, for example, be based on the typical displacement between one or more tuples of successive geo-locations. Preferably, the past geo-locations used for the improvement are selected in a floating window-like fashion, i.e., older geo-locations are discarded when newer geo-locations are added. The samples inside the floating window may represent a selection based on one or more of a time and/or date and the distance between geo-locations. The improvement may reside in improved filter settings for removing motion components that would otherwise disturb the estimation. The improvement may involve inferring a most likely mode of displacement, i.e., how the distance was covered. Modes of displacement include walking, cycling, by car, by train, by aircraft, by ship, etc. For example, if the displacement and the according time differences between successive images and geo-locations indicate that the user is moving slowly, e.g. walking, the filter settings may be adapted to remove disturbing motion components typical for walking. Similarly, filter settings for displacement by bicycle, car, railroad, aircraft, ship and the like may be selected based on the samples inside the floating window.

A camera implementing the present method has a microprocessor, a random access memory, a non-volatile memory, a real time clock module and at least one geo-location receiver. The non-volatile memory stores program instructions which, when executed by the microprocessor, process data provided from the at least one geo-location receiver to determine a correct geo-location of the camera. The camera further comprises at least one sensor that is adapted to detect motion of the camera. The non-volatile memory further stores program instructions which, when executed by the microprocessor, process the detected motion and data from the real time clock module into an estimated spatial displacement from a previously determined geo-location.

The present method allows for adding geo-location data to images or videos even in case the geo-location receiver has not received a correct geo-location. Some of the sensors used in accordance with the present method may already be present for other purposes, e.g. accelerometers or gyroscopes that provide sensor data for image stabilisation.

### DESCRIPTION OF DRAWINGS

In the following section the method will be described with reference to the drawings. In the drawings
- Figure 1: shows an exemplary flow of actions and statuses when operating a camera in accordance with the present method;
- Figure 2: shows an exemplary user menu in accordance with the present method;
- Figure 3: represents a basic exemplary flow diagram of an embodiment of the present method;
- Figure 4: represents another basic exemplary flow diagram of an embodiment of the present method; and
- Figure 5: shows an exemplary block diagram of a camera adapted to implement the present method.

### DETAILED DESCRIPTION OF EMBODIMENTS

In the figures same or similar elements and features are referenced using the same reference numbers.

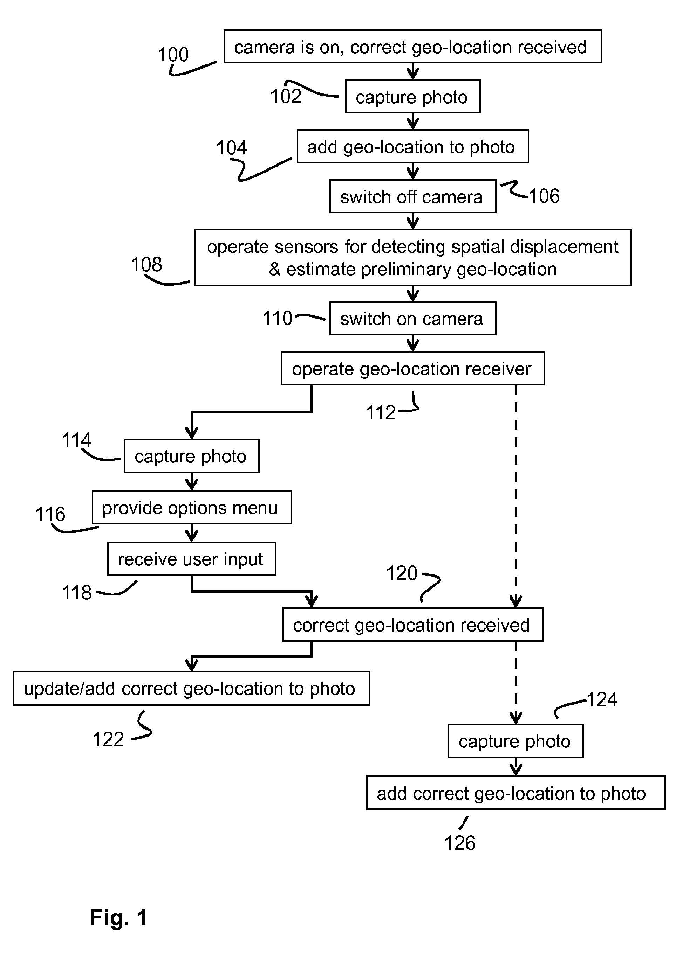

Figure 1 shows an exemplary flow of actions and statuses when operating a camera in accordance with the present method. The initial status 100 indicates that the camera has previously received a correct geo-location. In step 102 the user takes a photo, and the previously received correct geo-location is added to the photo in step 104. Then the camera is switched off in step 106. While the camera is switched off sensors in the camera are operated in step 108 for detecting a spatial displacement of the camera from the last known correct geo-location and for estimating a preliminary geo-location. In step 110 the camera, which meanwhile may have been moved by a substantial distance, is switched on. After switching on the geo-location receiver is operated in step 112 to receive a correct geo-location. The method now branches in two possible paths.

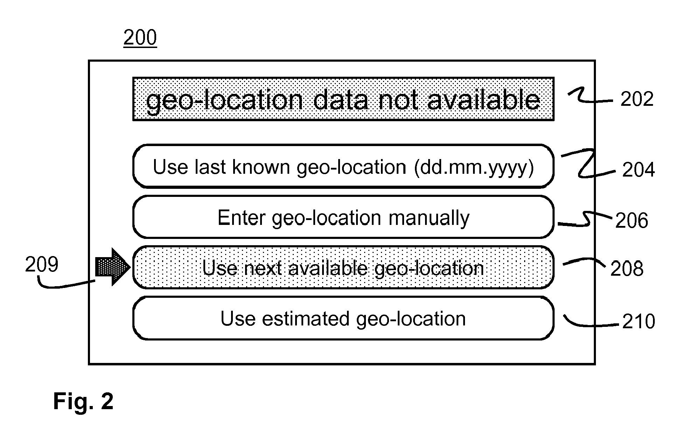

In the first possible path the user takes a photo in step 114 while the geo-location receiver has not yet received a correct geo-location. In step 116 the camera offers a menu option for the user to make a choice how to deal with the situation - or it follows a predefined or preselected choice (not shown in Fig. 1). The menu will be discussed below with reference to figure 2. In step 118 the camera receives a user input. For example, the user has chosen not to add a geo-location to the photo, or to add the preliminary geo-location determined from the spatial displacement, but to tag the added geo-location as unreliable. If the user switches the camera off now, the method will return to step 108. This is another possible branch of the method that is not shown in the figure for clarity reasons. In the meantime the geo-location receiver may have received a correct geo-location, step 120. The preliminary geo-location added to the photo in step 118 is now updated using the correct geo-location, or, if no preliminary geo-location was added to the photo in step 118, the correct geo-location is now added in step 122.

In the second possible path, indicated by the dashed connection lines between the method steps, the geo-location receiver has received a correct geo-location in step 120 before a user take a photo in step 124. The correct geo-location is added to the photo in step 126 without any further user interaction.

Figure 2 shows an exemplary user menu 200 presented to the user in step 116 of figure 1. Field 202 indicates to the user that correct geo-location data is not available. User-selectable options 204-210 provide choices how to deal with this situation. Option 204 suggests to use the last known geo-location. Option 204 also provides a date when this location was valid, providing more information to the user for deciding on a proper choice. Option 206 invites the user to manually enter the geo-location, and option 208 suggests to use the next available correct geo-location. Selection of this option may simply use the next correct geo-location that becomes available, or keep the geo-location receiver powered even after the camera has been switched off until a correct geo-location has been received. An according choice may be made by corresponding user input on a next level of a hierarchical user interface or by a previous set preference in a user settings menu. Option 208 is currently selected in the figure, indicated by the different background pattern and by selector icon 209 that is placed near the option field. Option 210 suggests using an estimated geo-location, e.g. the preliminary geo-location determined using sensor data indicating spatial displacement of the camera. This option may also include automatically correcting estimated geo-location data once a correct geo-location has been received. Again, a further selection to this end may be done in another level of a hierarchical user menu or by corresponding settings in a user preference menu.

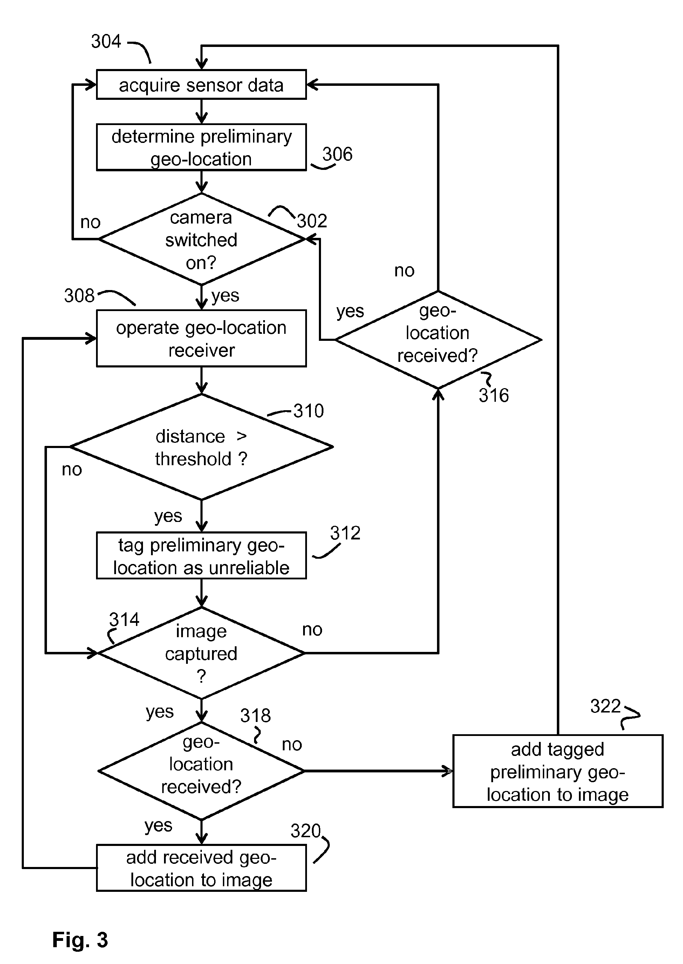

Figure 3 represents a basic exemplary flow diagram of an embodiment of the present method. While the camera is not switched on, "no"-branch of step 302, sensor data data from at least one sensor provided with the camera that is adapted to detect motion is acquired in step 304. The sensor data is used for determining a preliminary geo-location in step 306. As long as the camera is switched off steps 302, 304 and 306 may be executed in a first loop with appropriate periodicity or triggered by changes in the data provided from the sensors for providing a sufficiently accurate preliminary geo-location. The periodicity or the trigger level may be traded off against the accuracy. Corresponding parameters may also be user settable. When the camera is switched on, "yes"-branch of step 302, the geo-location receiver is powered and operated in step 308 for receiving a correct geo-location. The geo-location may not be received immediately, and the geo-location receiver may need to be operated over an extended period of time for eventually receiving a correct geo-location. Meanwhile, other steps of the present method will be run concurrently with operating the geo-location receiver. Step 310 checks if the distance between the last previously determined preliminary geo-location and the last known correct geo-location, i.e. the last known geo-location that was received by the geo-location receiver, exceeds a threshold. The threshold may be user settable or automatically determined based on various parameters including one or more of the elapsed time since the last known correct geo-location was received and the amplitude, frequency and periodicity of motion sensed by the at least one sensor. If the distance exceeds the threshold, "yes"-branch of step 310, the preliminary geo-location is tagged unreliable in step 312 before proceeding to step 314. Otherwise, "no"-branch of step 310, the method directly proceeds to step 314, which checks if an image or a video is or has been captured. If no image or video is or has been captured, "no"-branch of step 314, the method continues to step 316, which checks if a correct geo-location has been received in the meantime. In the negative case, "no"-branch of step 316, the method returns to step 304 and determines an updated preliminary geo-location based on acquired sensor data. It is noted that the sensor data may be acquired and the preliminary geo-location may be determined concurrently with processing other steps of the method. This depends, inter alia, from the time required for acquiring sensor data and for determining the preliminary geo-location, the frequency with which sensor data is acquired, and the time required for processing other steps of the present method or other processes in the camera. It also depends on the processor hardware present in the camera, e.g. the processor speed, the number of threads the processor can run in parallel, and the like. If a geo-location has been received, "yes"-branch of step 316, the method may continue to operate the geo-location receiver, step 308, as long as the camera is switched on, which is checked in step 302. Since the geo-location receiver provides correct geo-location there is no need to further operate the sensors and to determine a preliminary geo-location. As long as no image is taken and the camera is switched on the method may run in a second loop, tracking the correct geo-location. While executing the second loop, step 310 will proceed to the "no"-branch as long as a correct geo-location is received. If a correct geo-location is no longer received while looping the method will eventually return to step 304 and start to detect motion and to determine a preliminary geo-location.

If an image or a video is or has been captured, "yes"-branch of step 314, depending on the availability of a correct geo-location, the method, in step 320, either adds a received correct geo-location to the image or video, or, in step 322, adds a tagged preliminary geo-location to the image or video. Availability of correct geo-location is checked in step 318 or may be indicated or flagged by an according signal from the geo-location receiver. If a correct geo-location has been added to the image or video the method returns to step 308 and continues to track the geo-location of the camera as described further above with reference to the second loop. If a tagged preliminary geo-location has been added to the image or video the method returns to step 304 and will continue to update the preliminary geo-location based on sensor data until a correct geo-location is eventually received.

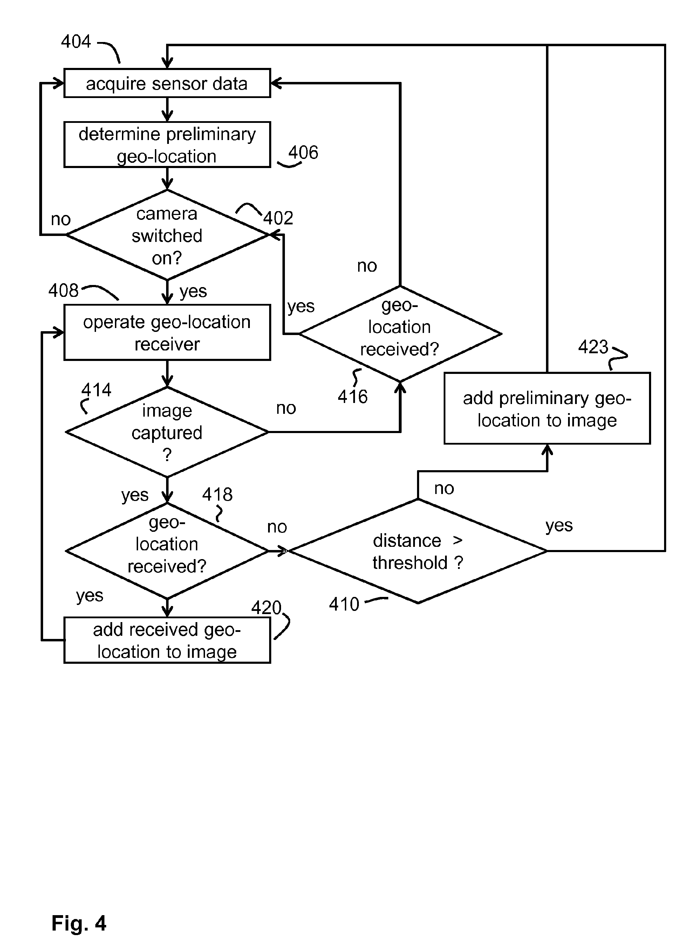

Figure 4 represents another basic exemplary flow diagram of an embodiment of the present method. While the camera is not switched on, "no"-branch of step 402, sensor data data from at least one sensor provided with the camera that is adapted to detect motion is acquired in step 404. The sensor data is used for determining a preliminary geo-location in step 406. As long as the camera is switched off steps 402, 404 and 406 may be executed in a first loop with appropriate periodicity or triggered by changes in the data provided from the sensors for providing a sufficiently accurate preliminary geo-location. The periodicity or the trigger level may be traded off against the accuracy. Corresponding parameters may also be user settable. When the camera is switched on, "yes"-branch of step 402, the geo-location receiver is powered and operated in step 408 for receiving a correct geo-location. The geo-location may not be received immediately, and the geo-location receiver may need to be operated over an extended period of time for eventually receiving a correct geo-location. Meanwhile, other steps of the present method will be run concurrently with operating the geo-location receiver. Up to this point the embodiment of the method substantially corresponds to the embodiment described with reference to figure 3. Step 414 checks if an image or a video is or has been captured. If no image or video is or has been captured, "no"-branch of step 414, the method continues to step 416, which checks if a correct geo-location has been received in the meantime. In the negative case, "no"-branch of step 416, the method returns to step 404 and determines an updated preliminary geo-location based on acquired sensor data. It is noted that, similar to the embodiment described with reference to figure 3, the sensor data may be acquired and the preliminary geo-location may be determined concurrently with processing other steps of the method. This depends, inter alia, from the time required for acquiring sensor data and for determining the preliminary geo-location, the frequency with which sensor data is acquired, and the time required for processing other steps of the present method or other processes in the camera. It also depends on the processor hardware present in the camera, e.g. the processor speed, the number of threads the processor can run in parallel, and the like. If a geo-location has been received, "yes"-branch of step 416, the method may continue to operate the geo-location receiver, step 408, as long as the camera is switched on, which is checked in step 304. Since the geo-location receiver provides correct geo-location there is no need to further operate the sensors and to determine a preliminary geo-location. As long as no image is taken and the camera is switched on the method may run in a second loop, tracking the correct geo-location. If a correct geo-location is no longer received while looping the method will eventually return to step 404 and start to detect motion and to determine a preliminary geo-location.

If an image or a video is or has been captured, "yes"-branch of step 414, depending on the availability of a correct geo-location, the method, in step 420, either adds a received correct geo-location to the image or video, or, if no correct geo-location has been received, proceeds to step 410. Availability of correct geo-location is checked in step 418 or may be indicated or flagged by an according signal from the geo-location receiver. If a correct geo-location has been added to the image or video the method returns to step 408 and continues to track the geo-location of the camera as described further above with reference to the second loop. In step 410 the method checks if the distance between the last previously determined preliminary geo-location and the last known correct geo-location, i.e. the last known geo-location that was received by the geo-location receiver, exceeds a threshold. The threshold may be user settable or automatically determined based on various parameters including one or more of the elapsed time since the last known correct geo-location was received and the amplitude, frequency and periodicity of motion sensed by the at least one sensor. If the distance exceeds the threshold, "yes"-branch of step 410, the method returns to step 404 without adding a geo-location to the image or video. Otherwise, "no"-branch of step 410, the method, in step 4 23, adds a preliminary geo-location to the image or video.

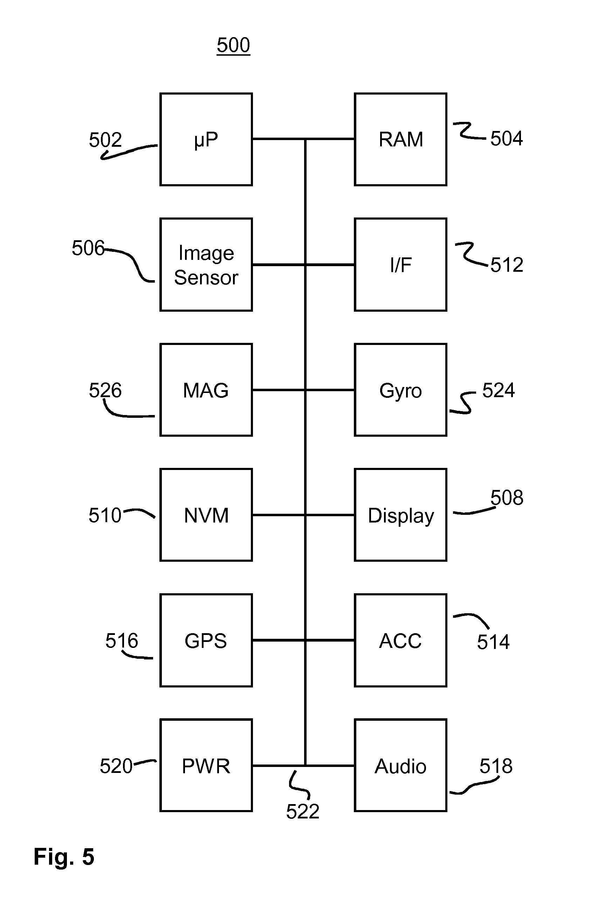

Figure 5 shows an exemplary block diagram of a camera 500 adapted to implement the present method. Microcontroller 502, random access memory (RAM) 504, image sensor 506, display 508, non-volatile memory 510, one or more interfaces 512, accelerometer 514, geo-location receiver 516, audio circuitry 518 and power supply circuit 520 are connected through one or more data and power buses 522. A gyroscope 524 and a magnetic field sensor 526 may also be provided in the camera and be connected to microprocessor 502 and other system components through the one or more data and power buses 522. For clarity the one or more data and power buses 522 are shown as a single bus system. Each of the one or more data and power buses may connect only a subset of the components. Microprocessor 502 may be of a conventional design using a known general processor architecture and may also comprise a graphics processing subsystem for processing image and video data during capturing and for display. Image sensor 506 may be of a conventional type including, but not limited to, CCD and CMOS sensors, and may also be adapted to capture images and video in 3-D and/or post capture variable focus. Display 508 may be of a conventional type and design including one of liquid crystal display (LCD), light emitting diode (LED) display, organic light emitting diode (OLED) display, electronic ink and other, active or passive, reflective, transflective or self-emitting display types, adapted for rendering color or black and white images and video. Non-volatile memory 510 may be of conventional design and type including one of NAND- or NOR-Flash memory, ferroelectric random access memory (FRAM), magnetoresistive random access memory (MRAM), phase change memory (PCM), and the like. Interfaces 512 may include one or more of user interfaces, e.g. buttons, touch interfaces, keyboards and the like, wired interfaces to external devices comprising serial or parallel interface buses, wireless interfaces comprising, inter alia, Bluetooth and wireless local area network (WLAN), and other interfaces, standardized or proprietary, e.g. for connecting external storage media. Geo-location receiver 516 may include one or more of receivers adapted to receive and process signals according to the Global Positioning System (GPS), its Russian equivalent GLONASS, its European equivalent Galileo, and other standards, including radio beacons such as locally fixed Bluetooth beacons that transmit corresponding geo-location data. Audio circuitry 518 may include one or more amplifiers, loudspeakers, microphones, buzzers, and according drivers and processors. Power supply circuit 520 may include a rechargeable battery or primary cell, one or more DC/DC converters, charging circuitry, a power management unit adapted to selectively provide power to individual ones of the system components depending on an operating mode. The power management unit may be controlled by microprocessor 502.

## Claims

1. Method of operating a camera having at least one geo-location receiver, wherein the at least one geo-location receiver is inactive when the camera is switched off and is active when the camera is switched on, and wherein the acquisition of a current geo-location by the at least one geo-location receiver is subject to limited availability of required external signals and/or requires a time after activation of the at least one geo-location receiver that is longer than a time between switching the camera on for capturing an image or a video and switching the camera off after capturing the image or the video, the method comprising, while the camera is switched off or the at least one geo-location receiver has not acquired a correct geo-location:
- acquiring sensor data from at least one sensor provided with the camera that is adapted to detect motion; and
- determining a preliminary geo-location using an estimated spatial displacement of the camera from the last known geo-location based on the acquired sensor data;
the method comprising, when the camera is switched on:
- running a process operating the at least one geo-location receiver for receiving a correct geo-location; and
- while a correct geo-location from the at least one geo-location receiver is not received and the distance between the preliminary geo-location and the last known geo-location exceeds a threshold value, tagging the preliminary geo-location that is added to an image or a video as unreliable, or preventing the preliminary geo-location data from being added to an image or video.

2. The method of claim 1 further comprising providing the preliminary geo-location of the camera to the process operating the at least one geo-location receiver for receiving a correct geo-location, for accelerating the acquisition of the correct geo-location of the camera.

3. The method of claim 1 wherein the distance threshold value is user-settable.

4. The method of claim 1 wherein estimating the preliminary geo-location comprises dead-reckoning using time data and one or more of accelerometer, gyroscope and magnetic field sensor data.

5. The method of claim 1 further comprising normalizing sensor data from the at least one sensor provided with the camera that is adapted to detect motion for obtaining true motion vectors in the global vertical plane and the global horizontal plane perpendicular to the vertical plane.

6. The method of claim 1, wherein a reliability value is added to the estimated the preliminary geo-location, wherein the reliability value is decreasing with increasing temporal distance to the time the last correct geo-location was received by the geo-location receiver and/or increasing distance from the last correct geo-location.

7. The method of claim 1 further comprising receiving a user input to switch the camera off and issuing an alert perceivable to a user when a correct geo-location was not received prior to switching the camera off.

8. The method of claim 7 further comprising receiving a user input to continue running the process operating the geo-location receiver until a correct geo-location is received, and adding the received correct geo-location to at least one of the last images or videos previously taken, to which a geo-location had not yet been added.

9. The method of claim 8 wherein the user input is a previously set parameter from a configuration database maintained in the camera.

10. The method of claim 1, further comprising connecting wirelessly to an external device for receiving a correct geo-location from the external device when the camera is switched on.

11. The method of claim 1, wherein the estimated preliminary geo-location that was added to a second image or video is corrected based on a correct geo-location that was added to a first image or video which was taken before the second image or video and a correct geo-location that was added to a third image that was taken after the second image or video, and further based on data representing the spatial displacement of the camera between instances when the first and the second image were taken and between the instances when the second and the third image were taken.

12. The method of claim 1, further including storing a set of previously estimated or received preliminary or correct geo-locations, respectively, inferring a likely mode of displacement and adjusting filter settings for removing disturbing motion components typical for the mode of displacement.

13. A camera having a microprocessor, a random access memory, a non-volatile memory, a real time clock module and at least one geo-location receiver, wherein the non-volatile memory stores program instructions which, when executed by the microprocessor, operate and process the data from the at least one geo-location receiver to determine a correct geo-location of the camera, the camera further comprising at least one sensor that is adapted to detect motion of the camera, wherein the non-volatile memory further stores program instructions which, when executed by the microprocessor, process the detected motion and data from the real time clock module into an estimated spatial displacement from a previously determined geo-location and determine a preliminary geo-location, while the camera is switched off or a correct geo-location has not yet been received, wherein the non-volatile memory further stores program instructions which, when executed by the microprocessor, tag the preliminary geo-location as unreliable or prevent the preliminary geo-location from being added to an image or a video when a distance between the preliminary geo-location and the last known correct geo-location exceeds a threshold value.

14. The camera of claim 13 wherein the non-volatile memory further stores program instructions which, when executed by the microprocessor, provide the estimated spatial displacement of the camera from the last known correct geo-location or the preliminary geo-location to the process operating the at least one geo-location receiver for receiving a correct geo-location of the camera, for accelerating receiving the correct geo-location of the camera.

15. The camera of claim 13 wherein the at least one sensor adapted to detect motion comprises one or more of an accelerometer, a gyroscope and a magnetic field sensor.
